# EUROPEAN PATENT APPLICATION

(11) **EP 1 191 200 A1**
(43) Date of publication of application: **27.03.2002**
(21) Application number: 99924007.0
(22) Date of filing: 11.06.1999
(51) Int. Cl.: F02B 23/10, F02M 61/14, F02M 61/18

(54) **CYLINDER INJECTION TYPE INTERNAL COMBUSTION ENGINE**

(71) Applicant: Hitachi, Ltd., Chiyoda-ku, Tokyo 101-8010 (JP)
(72) Inventor: KIHARA, Yusuke Hitachi, Ltd., Hitachi-shi Ibaraki 319-1221 (JP); NOGI, Toshiharu Hitachi, Ltd., Hitachi-shi Ibaraki 319-1221 (JP); SUKEGAWA, Yoshihiro Hitachi, Ltd., Hitachi-shi Ibaraki 319-1221 (JP); SHIRAISHI, Takuya Hitachi, Ltd., Hitachi-shi Ibaraki 319-1221 (JP); TOKUYASU, Noboru Hitachi, Ltd., Hitachi-shi Ibaraki 319-1221 (JP); NAKAYAMA, Yoko Hitachi, Ltd., Hitachi-shi Ibaraki 319-1221 (JP)
(74) Representative: Beetz & Partner Patentanwälte
(86) International application number: JP9903132
(87) International publication number: WO0077361

(57) **Abstract**

A recessed portion shape provided on a piston is formed the most suited one and a tumble air flow into a combustion chamber is made the most suited one for a transportation of a fuel. Accordingly a fuel adhesion to the piston can be prevented and as a result a reduction of a harmful substance included in an air exhaust gas and a fuel consumption performance by selecting the mast suited injection timing in response to a rotation number can be improved.

## Description

### Technical Field

The present invention relates to a direct injection system internal combustion engine in which the fuel is injected directly to a combustion chamber and in type in which a spark is carried out using an ignition plug which is installed to an upper portion of the combustion chamber, and in particularly relates to a direct injection system internal combustion engine in which a recessed portion is provided on an apex face of a piston and according to an air fluidization an air-fuel mixture is transported to the ignition plug and a stratification combustion is carried out.

### Background Art

This kind of the direction injection system internal combustion engine has known in, for example, Japanese application patent laid-open publication No. Hei 6-81656, Japanese application patent laid-open publication No. Hei 10-8967, Japanese application patent laid-open publication No. Hei 10-30441, Japanese application patent laid-open publication No. Hei 10-110660, Japanese application patent laid-open publication No. Hei 10-110662, Japanese application patent laid-open publication No. Hei 10-169447, Japanese application patent laid-open publication No. Hei 9-317475, Japanese application patent laid-open publication No. Hei 10-169447, Japanese application patent laid-open publication No. Hei 7-293259, Japanese application patent laid-open publication No. Hei 7-293259, Japanese application patent laid-open publication No. Hei 11-50847, and United States Patent specification No. 5878712 etc..

In the above stated conventional direct injection system internal combustion engines, to an apex face of a piston a recessed portion is provided, utilizing this recessed portion a tumble air flow is formed in a combustion chamber, according to this tumble air flow a thick layer of the fuel is formed in a vicinity of an ignition plug.

However, in the conventional constructions, according to the tumble air flow there is a possibility in which the fuel is diffused in the combustion chamber and there is a problem that the fuel adheres to the apex face of the piston and to a wall face of the combustion chamber and to an exhaust gas an unburned hydrocarbon (THC) of a harmful substance is exhausted.

Further, a fuel injection timing is limited according to a position of the piston, when an engine rotation number is varied, it is impossible to select the most suited fuel injection timing for a fuel consumption performance.

The present invention has taken an attention to the above stated problems and an object thereof resides in that a shape of a recessed portion provided to the piston is devised and a fuel adhesion to the piston can be reduced and the harmful substances contained in an exhaust gas can be reduced, further an improvement of a fuel consumption performance can be devised.

### Disclosure of the Invention

According to the present invention to attain the above stated object, in an upper portion of a center of a combustion chamber an ignition plug is provided, and a fuel injector is provided to a side portion of the combustion chamber in a side of an air intake valve, to an apex face of a piston a recessed portion (a groove) is provided along to a flat plane including the ignition plug and the fuel injector, and further an ascendant air flow directing for from a lower portion of the fuel injector toward an upper portion and a normal tumble air flow directing from the fuel injector toward the ignition plug are generated.

In preferably, the recessed portion of the apex face of the piston is formed with a curved face, a tangential line of the curved face in a side portion of a side of an air intake valve is constituted to position in a lower from a tip end of a nozzle of the above fuel injector in a position of a piston in which a crank angle of an internal combustion engine is 40 degrees before a top dead center.

Accordingly, the normal tumble flow is led to a wall face of a cylinder block along to the recessed portion of the apex face of the piston and is jetted up to a lower portion of the fuel injector along to the inner wall of the combustion chamber, and then the normal tumble flow for rotating from the fuel injector by passing through the ignition plug is generated.

As stated in above, when the fuel is ridden on the normal tumble air flow and the fuel is transported to the ignition plug, a fuel spray is not adhered to the piston but it is possible to reach the fuel spray at a vicinity of the ignition plug, under the conditions of a high load and a high rotation, a stable spark performance can be obtained and it is possible to carry out a stratification operation to the high load and the high rotation.

Further, a width of the recessed portion is formed narrow gradually to direct from the side of an exhaust valve toward the side of the air intake valve and then it is possible to make large the jet-up speed of the normal tumble flow, accordingly the fuel adhesion to the piston can be reduced, further the transportation of the fuel to the vicinity of the ignition plug can be carried out surely.

### Brief Description of the Drawings:

Fig. 1 is a cross-sectional view for explaining a behavior of an air and an injection fuel immediately after a fuel injection of a direst injection system internal combustion engine using a principle according to the present invention.
Fig. 2 is a whole perspective view showing a construction of one embodiment according to the present invention.
Fig. 3 is a piston shape showing one embodiment according to the present invention.
Fig. 4 is a piston shape showing another embodiment according to the present invention.
Fig. 5 is a piston shape showing a further another embodiment according to the present invention.
Fig. 6 is a schematic view for explaining a principle according to the present invention.
Fig. 7 is a cross-sectional view showing an air intake stroke of a direct injection system internal combustion engine using a principle according to the present invention.
Fig. 8 is a cross-sectional view showing an ignition timing of an internal combustion engine of a direct injection system internal combustion engine using a principle according to the present invention.
Fig. 9 is a cross-sectional view showing an ignition timing of an internal combustion engine of an immediately after of a fuel injection of a direct injection system internal combustion engine using a principle according to the present invention.
Fig. 10 is a cross-sectional view showing an ignition timing of an internal combustion engine of a direct injection system internal combustion engine using a principle according to the present invention.
Fig. 11 to Fig. 15 are various embodiments showing a piston used in the present invention.
Fig. 16 is a simulation view showing an air-fuel ratio for explaining effects according to the present invention.
Fig. 17 is a simulation view showing a behavior of a fuel for explaining effects according to the present invention.

### The Best Form of Embodiment for Carrying-out the Invention

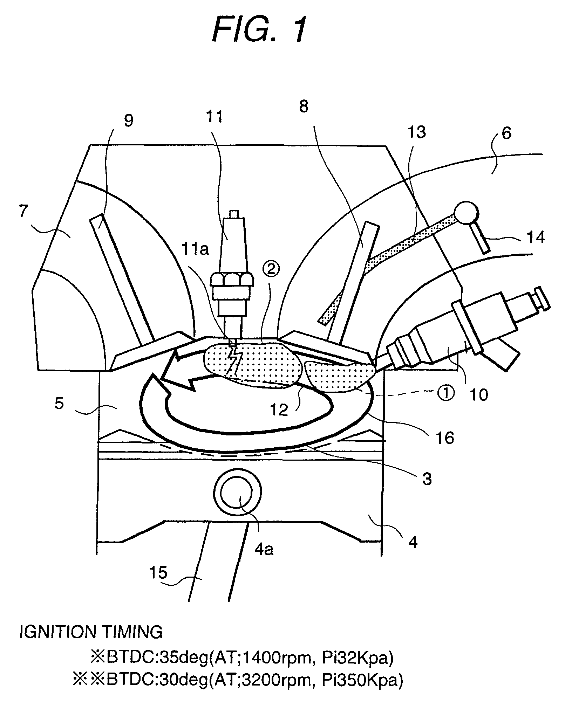

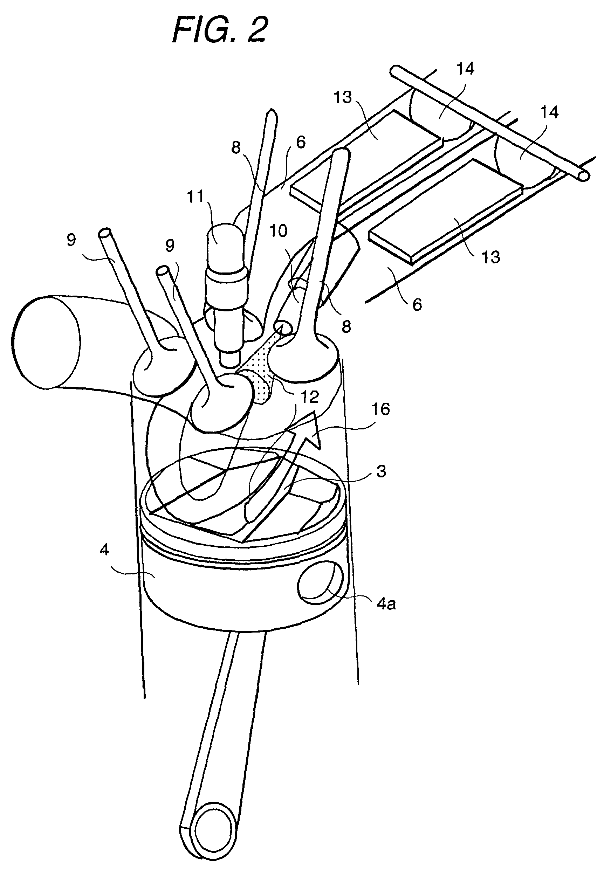

The embodiment according to the present invention will be explained referring to Fig.1 and Fig. 2.

Fig. 1 is a view showing a construction of a direct injection system internal combustion engine for explaining a principle according to the present invention.

Fig. 2 is a constructional view showing the embodiment of a direct injection system internal combustion engine using the principle according to the present invention. The same reference characters shown in Fig.1 and Fig. 2 express the same function members.

To a cylinder block 1, a cylinder head 2 is installed, and a piston 4, which is provided in a recessed portion 3 of the cylinder block 1, is provided. A space constituted by the above stated cylinder head 2 and the piston 4 forms a combustion chamber 5. The cylinder head 2 has a pent-roof type.

To the cylinder head 2, an air intake pipe for opening to the combustion chamber 5 and an air exhaust pipe are formed, every cylinders, two air intake pipes 6 and two air exhaust pipes 7 are formed. To the air intake pipe 6 an air intake valve 8 is provided and to the air exhaust pipe 7 an air exhaust valve 9 is provided.

A peripheral edge portion of a side of the air intake valve in the combustion chamber 5, a fuel injector 10 is installed to inject directly the fuel into the combustion chamber 5, and an ignition plug 11 is provided in which an ignition gap is positioned at a center of a ceiling portion of the combustion chamber 5. The above stated fuel injector 10 uses a high pressure swirl type fuel injector having a jet outlet shape to give a swirl force to a fuel spray 12.

At an upstream of the air intake valve 8, a flow rectifying plate 13 for dividing two a flow passage of the air intake pipe 6 in an upper portion and in a lower portion is provided and in the upstream thereof a flow dividing valve 14 is provided. The flow dividing valve 14 operates, when a lower portion flow passage is shut off within a range of 90 degrees and within the two divided flow passage according to the flow rectifying plate 13 and a flow passage area of the air intake pipe 6 is reduced, a velocity of a normal tumble flow generated in the combustion chamber 5 becomes fast.

When the velocity of the normal tumble flow is unnecessary, or when much air is inhaled in the combustion chamber 5, it operates to open the lower portion flow passage.

The air intake valve 8 and the air exhaust valve 9 are operated according to a cum shaft (not shown in figure) provided on the upper portions, and since the piston 4 pushes and passes through a connecting pin through a hole 4a, it is connected rotatively together with a connecting rod 15, as a result the piston 4 can operate upwardly and downwardly by connecting together with a crank shaft (not shown in figure) through the connecting rod 15.

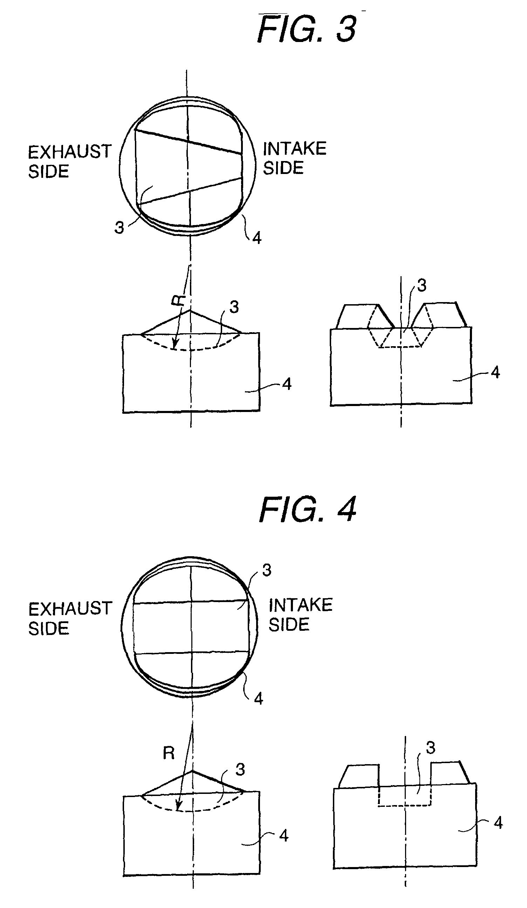

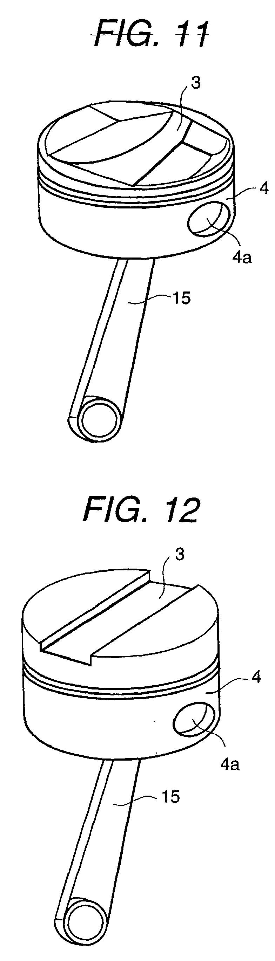

Relating to the shape of the recessed portion (the groove), as shown in Fig. 3 and Fig. 11, to a mountain type of an apex face of the piston the recessed portion is formed with a depression portion having a radius of R and a width of the above stated recessed portion is formed to be narrow gradually directing for from a side of the air intake valve toward a side of the air exhaust valve. In accordance with the provision of this groove, even when the piston is risen and a capacity of the combustion chamber becomes small, since the tumble air flow is maintained fully, it is possible to carry out the stratification combustion during the high rotation time.

Further, since the air flow goes around fully to the lower portion of the fuel injector, there is no generation about a secondary eddy according to a leakage air flow (this is shut off by the flow dividing valve) which is leaked from a lower portion passage of the two divided air intake pipe. With this fact, the tumble air flow can be maintained fully and the fuel amount for transporting to the vicinity of the ignition plug can be made much.

Further, since the width of the groove is constituted to be narrow gradually from the side of the air intake valve to the side of the air exhaust valve, it is possible to make large the jet-up velocity of the normal tumble flow, accordingly the fuel adhesion to the piston can be reduced further, and the transportation of the fuel to the vicinity of the ignition plug can be carried out further surely.

This groove is formed in perpendicular to the connecting pin between the piston 4 and the connecting rod 15 and the pin inserting hole 5a. As a result, to the rotation of the connecting rod there generates no unbalance. Further, the balance in a peripheral direction of the piston can be maintained.

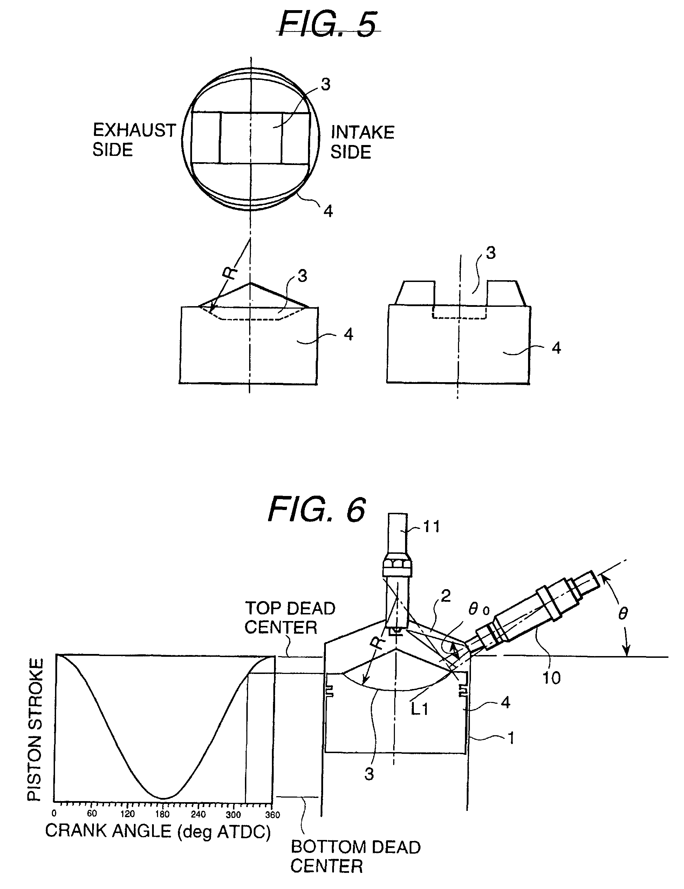

The shape of the recessed portion 3 provided to the piston according to the present invention is not limited to the shape shown in Fig. 3 but as shown in Fig. 4 it is possible to form one in which the width of the recessed portion 3 is constant and further as shown in Fig. 5 to form one in which the recessed portion 3 is constituted according to a curved face and a flat face.

Further, the flat construction of the apex of the piston can be adopted. This example will be shown from Fig. 12 to Fig. 15.

In Fig. 12, a groove having an uniform width is provided with an uniform depth from the sided of the air exhaust valve of the piston to the air intake valve, and since a shape thereof is simple, it is possible to process it easily.

Further, since a thermal distribution of the piston can be maintained comparatively uniformly, a lowering in the efficiency is few.

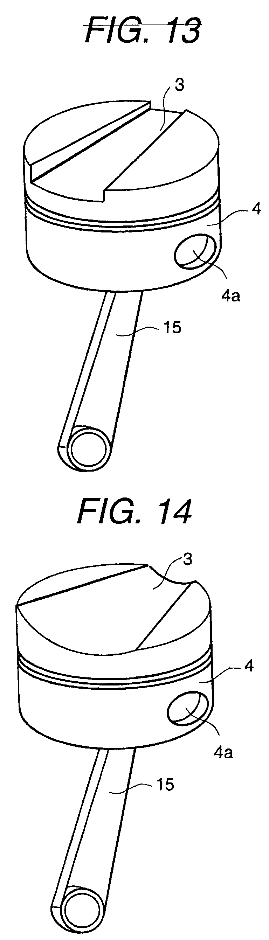

In Fig. 13, a width of a groove is constituted to be widely in the side of the air exhaust valve and to be narrow in the side of the air intake valve. Further, a depth of the groove is constituted to be deeply in the side of the air exhaust valve and shallow in the side of the air intake valve.

In the above construction, it has a merit in which the air intake from the two air intake valves is joined natural and one tumble flow can be formed.

In accordance with the provision of the slope, it has a merit, when in the lower portion of the fuel injector the tumble flow becomes the ascendant air flow, since a directional conversion can be carried out smoothly and the energy does not lose, accordingly a strong tumble air flow can be obtained.

In Fig. 14, a cross-section of a groove is not a rectangular shape as shown in Fig. 12 and Fig. 13 but is an arc shape. Further, a diameter of the groove is constituted to be large in the side of the air exhaust valve and to be small in the side of the air intake valve. In this construction, it has merit in which, since the groove can be processed only a rotation grinding, a good working performance can be obtained.

Further, it has a merit in which, since the groove has no corner portion, the air flow in the groove can be formed smoothly, a fluid loss can be reduced, and accordingly a further strong tumble flow can be generated.

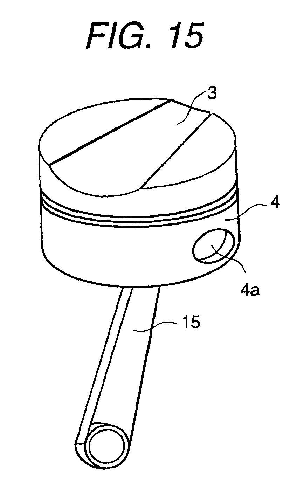

In Fig. 15, in a groove a gradient having a curvature from the side of the air exhaust valve to the side of the air intake valve is provided. According to this construction, the air flow is guided smoothly by the air along to the curvature and further the fluid loss can be reduced, accordingly a strong tumble air flow can be obtained.

In this embodiment, as shown in Fig. 6, a tangential line L in a side end portion of the air intake valve of the curvature face for forming the recessed portion is positioned in a lower portion from a tip end of the nozzle of the fuel injector 10 in a position where the piston is 40 degrees before the top dead center, and a position where a side end portion of the air exhaust valve for forming the recessed portion and the apex face of the piston are intersected is positioned in the side of the air exhaust valve from a position of an electrode position of the ignition plug 11.

Further, as shown in Fig. 3, the present invention have the features, which are the width of the recessed portion forming narrow directing for from the side of the air exhaust valve to the air intake valve, when the piston position is the position where the crank angle is before the top dead center of the crank angle is 40 degrees, a connecting position between the recessed portion in the side of the air exhaust valve and the apex face of the piston is lower than a center line of the fuel injection, with the above stated crank angle when the fuel is injected, the recessed portion shape having a largeness of the width where the fuel is not run over.

Next, the operation of this embodiment will be explained.

In a low load operation time, to improve the fuel consumption performance, a fuel injection amount is made of the air-fuel ratio of 40. When the air-fuel ratio is 40, the air-fuel mixture is mixed homogeneously the surrounding portion of the ignition plug becomes thin excessively and then the spark can not carry out, it is necessary to carry out a stratification operation by gathering and burning the air-fuel mixture having a thick fuel part with a stratification performance state.

In this embodiment, to carry out the stratification performance, in the combustion chamber 5 the normal tumble flow is generated and according to this normal tumble flow the fuel is transported to the ignition plug 11 and accordingly the stratification performance can be realized.

As shown in Fig. 1, when an engine rotation number is 1400 rpm and an average valid pressure in the combustion chamber is 320 Kpa (kilo-Pascal), before 70 deg before the top dead center the fuel is injected ((1)) and the fuel is ridden on the tumble air flow and is transported to the position of the ignition plug. After about 3.12 msec the fuel reaches to the surrounding portion of the ignition plug and this time just the ignition plug becomes a spark timing (35 deg before the top dead center) ((2)).

Further, when then engine rotation number is 3200 rpm and the average valid pressure in the combustion chamber is 350 Kpa (kilo-Pascal), 90 deg before the top dead center the fuel is injected ((1)) and the fuel is ridden on the tumble air flow and is transported to the position of the ignition plug. After about 3.0 msec the fuel reaches to the surrounding portion of the ignition plug and this time just the ignition plug becomes a spark timing (30 deg before the top dead center) ((2)). (This is called as a tumble guide system).

When in the various kinds operation areas, a time from the fuel injection to the spark timing has measured, it was understood that the time was within a range from 3 msec to 3.15 msec.

As a result, in this embodiment, in the area in which the stratification operation is carried out, in regardless of the rotation number and the load, the fuel can be injected with the ignition timing from 3 msec to 3.15 msec.

As stated in above, in this embodiment, since the fuel is transported in the combustion chamber with a very short route to the surrounding portion of the ignition plug, it can be lessen the possibility about the fuel adhesion to the inner wall of the combustion chamber and to the piston.

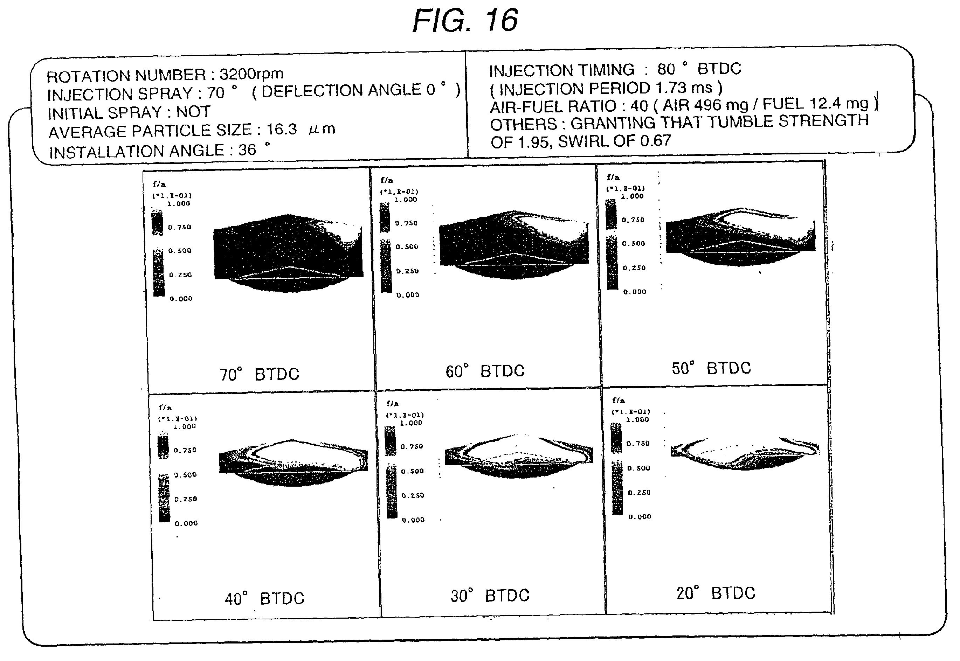

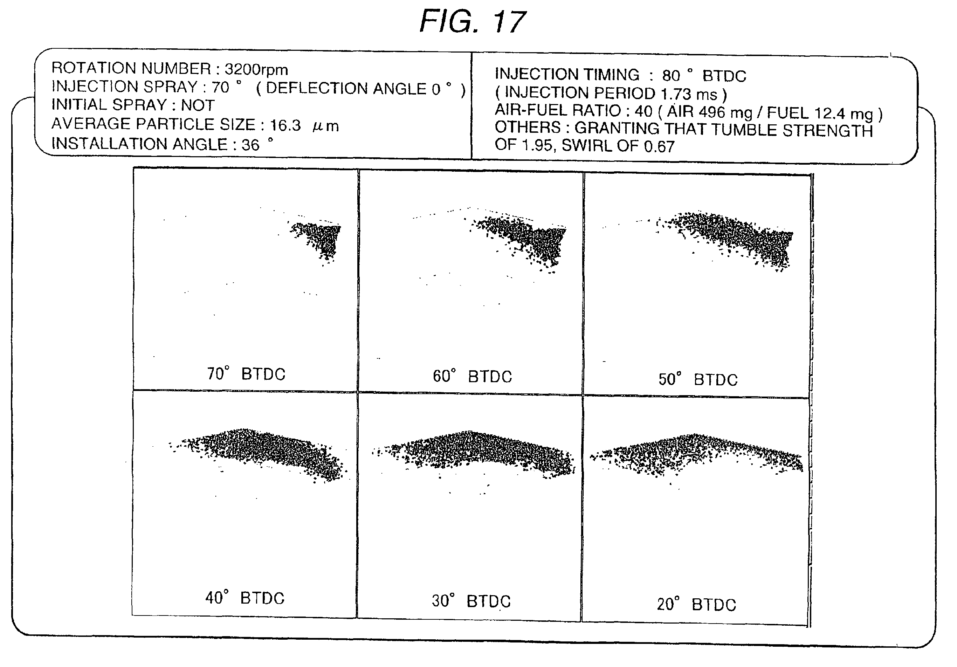

This manner was simulated and the simulation results were shown in Fig. 16 and Fig. 17.

The conditions were that when the engine rotation number was 3200 rpm and the average valid pressure in the combustion chamber is 350 Kpa (kilo-Pascal), 80 deg before the top dead center the fuel having an average particle diameter of 16.3 micron wad injected (the injection period of 1.73 msec).

The air-fuel ratio was 40 (the air of 496 mg / the fuel of 12.4 mg), an installation angle (confer Fig. 6) θ of the fuel injector was 36 degrees an injection angle θₒ (confer Fig. 6) was 70 degrees, the strong of the tumble air flow (between one reciprocation of the piston in the combustion chamber, the air rotates 1.95 rotations) was 1.95.

A decomposition view shown in Fig. 16 shows a variation of a rate f/a (fuel/air) of the fuel and the air every 10 deg after the fuel injection.

A white portion is a portion of the fuel of 100%, a blue portion was a portion of air of 100%, and in an intermediate portion it shows that the fuel becomes small in series.

At an angular portion in a center since the ignition plug is installed, at the time point of the 30 deg before the top dead center (a lower stage center) it was understood that the fuel was not contact to the piston but gathered the surrounding portion of the ignition plug.

In a lower stage right end, the time point of 30 deg before the top dead center the ignition was not carried out but leaving as it was the behavior of the fuel was simulated. It was confirmed that in this time point the tip end of the fuel was trying to swirl along to the groove of the piston and the effect of the tumble air flow was left.

In other words, in the compression stroke, in accompany with the lapse of the time, the piston is raised, in accordance with the provision of the recessed portion the normal tumble flow 16 can be preserved fully.

Further, as shown in Fig. 3, when the width of the recessed portion 3 is formed narrow gradually directing for from the side of the air exhaust valve to the side of the air intake valve, the two normal tumble flows from the two air intake valves are gathered according to the recessed portion 3, in the lower portion of the fuel injector 10, the velocity of the normal tumble flow 16 which was brought together with one becomes fast.

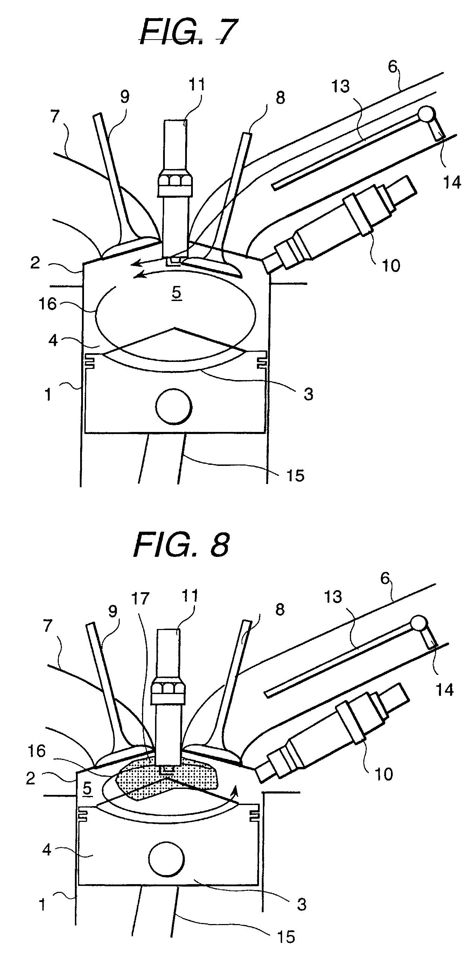

The above normal tumble flow 16 can prevent the fuel adhesion to the piston 4 by lifting up the fuel spray 12 toward an upper direction and, as shown in Fig. 8, without the scattering of the vaporized fuel and the air-fuel mixture 17 is transported to the ignition plug. And, the air-fuel mixture air 17 is performed to the stratification performance and in the ignition timing it can be sparked stable.

In this embodiment, according to the normal tumble flow 16 the fuel is transported to the ignition plug 11, however even the fuel injection start timing becomes faster in the normal tumble flow a flow pattern is not varied. Since the velocity of the normal tumble flow 16 increases, the time for transporting becomes short suitably, in a middle rotation time and in the high rotation time, it is possible to transport stable the fuel to the ignition plug 11, accordingly the fuel adhesion amount to the piston can be reduced.

In case a low load and a low rotation time, since one cycle time becomes long, to prevent the fuel scattering the most suited fuel injection start timing becomes slow. Further, in proportion to the rotation number, the air flow velocity of the normal tumble flow 16 becomes small, however in this embodiment since the normal tumble flow 16 exists, the transportation of the fuel can be carried out surely.

In particularly, in this embodiment, to prevent the fuel scatter, in the piston position of 40 deg before the top dead center of the crank angle, which is the fuel injection start timing in the low load and the low rotation area, the tangential line of the end portion of the air exhaust valve side of the recessed portion of the piston is formed lower from the center line of the fuel injector 10 and further is provided to have a width having a recessed portion shape in which injected fuel spray is not run over from the recessed portion 3.

Accordingly with the above construction, the fuel adhesion to the apex face of the piston 4 in the side of the air intake valve from the recessed portion 3 can be prevented and the run-over and the scattering of the fuel from the recessed portion can be prevented.

Further, according to the above construction, in response to the engine rotation number, since the strong of the tumble air flow is varied proportionally, even the case of the high rotation time, it is possible to select the most suited injection timing regardless of the position of the piston.

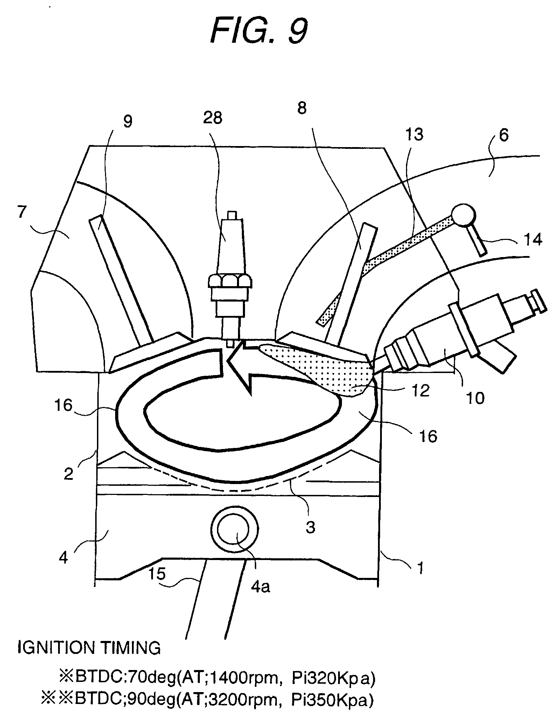

Fig. 9 shows the state in which prior to the ignition (spark) timing the fuel is injected from the fuel injector and the fuel is ridden to the tumble air flow.

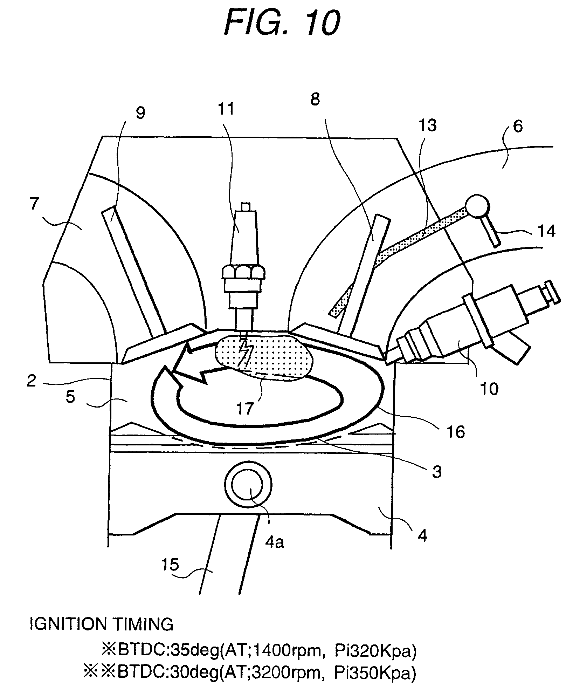

Fig. 10 shows the state of the ignition timing after about 3 msec (* the engine rotation number of 1400, the average valid pressure in the combustion chamber of 320 kilo-Pascal and 35 deg before the top dead center, ** the engine rotation number of 3200, the average valid pressure in the combustion chamber of 350 kilo-Pascal and 30 deg before the top dead center) and the fuel spray 17 is just transported to the surrounding portion of the ignition plug.

### Industrial Utilization Applicability

The present invention in which the recessed portion (the groove) shape provided to the piston and formed with the most suited one is utilized to the direct injection system internal combustion engine and also it can utilize to the piston itself.

Further, the present invention can be applied to the direct injection system internal combustion engine in which the apex portion of the piston is formed with a flat shape.

## Claims

1. A direct injection system internal combustion engine wherein an ignition plug is provided on an upper portion of a center of a combustion chamber, a fuel injector is provided on a side portion of said combustion chamber in a side of an air intake valve, at an apex face of a piston a recessed portion (a groove) is provided along to a flat plane including said ignition plug and said fuel injector, along to said groove an ascendant air flow directing for from a lower portion of said fuel injector toward an upper portion and an air flow directing for from said fuel injector toward said ignition plug are generated, and to said air flow by riding a fuel spray which is injected from said fuel injector, a fuel is transported to said ignition plug.

2. A direct injection system internal combustion engine according to claim 1, wherein said recessed portion of said apex face of said piston is formed with a curved face, a tangential line in said curved line of said recessed portion in a side end of said air intake valve is constituted to position in a lower of a tip end of a nozzle of said fuel injector in a position of said piston where a crank angle of said fuel injector of the internal combustion engine is 40 degrees before a top dead center.

3. A direct injection system internal combustion engine according to from claim 1 to claim 2, wherein a width of said recessed portion of said apex face of said piston is constituted to be narrow gradually from a side of an air exhaust valve to a side of said air intake valve.

4. A direct injection system internal combustion engine according to from claim 1 to claim 3, wherein a depth of said recessed portion of said apex face of said piston is reduced directing for from said side of said air exhaust valve to said side of said air intake side.

5. A piston for use in a direct injection system internal combustion engine, wherein a piston is connected to a connecting rod through a connecting pin and to an apex face of said piston a groove in perpendicular to a hole through which said connecting pin is passed.

6. A piston for use in a direct injection system internal combustion engine according to claim 5, wherein a width of said apex face of said piston is constituted to be narrow gradually directing for from one side of another side.

7. A piston for use in a direct injection system internal combustion engine according to claim 5 and claim 6, wherein a depth of said width of said apex face of said piston is constituted to reduce directing for from said one side toward said another side.
